# FASCICULE DE BREVET EUROPEEN

(11) **EP 1 231 120 B1**
(45) Date de publication et mention de la délivrance du brevet: **03.08.2011**
(21) Numéro de dépôt: 02001581.4
(22) Date de dépôt: 23.01.2002
(51) Int. Cl.: B60T 8/172

(54) **Mesures d'adhérence entre une roue de véhicule et la chaussée**
Haftmessungen zwischen einem Kraftfahrzeugrad und der Fahrbahn
Measuring adhesion between a vehicle wheel and the road

(30) Priorité: 07.02.2001 FR 0101672
(43) Date de publication de la demande: 14.08.2002
(73) Titulaire: Société de Technologie Michelin, 63000 Clermont-Ferrand Cedex 09 (FR); Michelin Recherche et Technique S.A., 1763 Granges-Paccot (CH)
(72) Inventeur: Merino Lopez, Jose, 63200 Riom (FR); Parmentier, Jean-Francois, 63100 Clermont-Ferrand (FR); Travert, Pierrick, 63110 Beaumont (FR)
(74) Mandataire: Bauvir, Jacques

(56) Documents cités:
- EP-A- 0 989 394
- WO-A-93/25400
- DE-A- 3 939 917
- US-A- 5 247 831
- US-A- 5 864 056
- US-A- 5 964 265

## Description

La présente invention se rapporte à l'adhérence d'un véhicule sur une chaussée. Elle concerne plus particulièrement la détermination de caractéristiques d'adhérence entre une roue de véhicule, équipée d'un bandage élastique tel qu'un pneu en roulage sur le sol, à partir de l'obtention de paramètres physiques dans l'aire de contact entre cette roue et la surface de roulement.

Il a déjà été proposé d'effectuer en permanence des mesures dans la bande de roulement d'un pneu pendant que roule un véhicule qu'il équipe, afin de connaître en temps réel les efforts qui se développent entre un pneu et le sol. On pourra consulter à ce sujet la demande de brevet DE 3937966 A1 ou US5964265. Cependant, pour intéressante qu'elle soit, une telle information reste insuffisante car le conducteur, ou même un dispositif automatique comme ceux visés par les désignations bien connues dans le domaine de l'automobile que sont « ABS » ou « ESP » restent incapables d'anticiper une dégradation de l'adhérence. Ainsi, on se contente de constater a posteriori le dépassement d'une limite d'adhérence, et on agit aussi rapidement que possible pour contrôler le véhicule. DE 3939917 A1 montre des éléments de mesure situés dans les gorges limitant les blocs d'une sculpture de la bande de roulement d'un pneu.

Il existe à cet égard un besoin pour obtenir des indications "en temps réel" des conditions d'adhérence susceptibles d'affecter dans les instants qui suivent le comportement d'un véhicule, notamment dans le cas où il subit une accélération importante, par effort moteur ou freineur ou par changement de trajectoire. L'invention vise à fournir des moyens et méthodes d'y parvenir de manière efficace, en procurant une information aussi réaliste que possible sur la marge de sécurité qui subsiste dans la conduite du véhicule.

L'invention a pour objet un pneu dont la bande de roulement comporte au moins un élément de mesure dont la surface est destinée à entrer en contact avec le sol à chaque tour du pneu, ledit élément de mesure, vu à la surface de la bande de roulement, ayant une zone centrale entourée d'une zone entourant la zone central, une lamelle découplant le matériau situé radialement sous la surface de la zone centrale par rapport au matériau adjacent situé sous la zone entourant la zone centrale, un capteur étant disposé de façon à effectuer une mesure dans ladite zone centrale, ledit capteur étant sensible au moins à un effort tangentiel exercé à la surface de ladite zone centrale.

L'invention propose donc d'adapter une partie de la bande de roulement afin de lui faire dépasser la limite d'adhérence dans de nombreuses circonstances de roulage, alors même que le reste de la bande de roulement ne dépasse pas la limite d'adhérence, donc ne glisse pas. Si l'on procède à au moins une mesure appropriée dans cette partie, on peut accéder à la connaissance du potentiel d'adhérence. Chaque fois qu'il est question ici de procéder à une mesure, le ou les capteurs nécessaires peuvent être extérieurs au pneu lui-même, ou noyés dans la paroi dudit pneu, comme précisé ci-dessous.

On entend ici par "élément de mesure" une partie de la bande de roulement du pneu dont la structure est adaptée au but poursuivi par l'invention. On implante un capteur pour effectuer une mesure sur cet élément de mesure. L'adaptation consiste à prévoir une zone de mesure centrale, entourée d'une zone d'encerclement, ayant des propriétés identiques à ce qui est utilisé dans une part significative de la bande de roulement. Les propriétés de la zone centrale de mesure diffèrent en ce que cette zone est assouplie par rapport à la zone d'encerclement. Cet assouplissement de la zone centrale permet de diminuer la pression de contact sur le sol, ce qui permet de glisser sur le sol. On entend par « propriétés » une évaluation globale ayant une contribution provenant des caractéristiques intrinsèques du matériau utilisé, et éventuellement une contribution conditionnée par la forme donnée par le moulage du matériau, cette dernière pouvant même être dominante. On entend par « part significative » une partie de la bande de roulement conçue uniquement en fonction des propriétés d'usage que le concepteur du pneu a voulu conférer au pneu considéré, par opposition à ce qui est voulu pour effectuer une mesure.

Dans ce qui suit, on entend par "potentiel d'adhérence d'un élément quelconque" le rapport entre l'effort tangentiel maximal global que cet élément, pris en totalité, peut subir au cours de son contact avec le sol, en un lieu donné, et l'effort normal appliqué à cet élément.

Nous désignons par "potentiel de frottement" le rapport entre la contrainte tangentielle locale et la contrainte verticale locale qui s'exercent en un point donné sur un élément de gomme en glissement sur le sol.

Nous appellerons "marge d'adhérence disponible" la différence entre le potentiel d'adhérence d'un élément et le rapport entre l'effort tangentiel global et l'effort vertical global effectivement appliqués à cet élément, pris en totalité, lors de son passage dans l'aire de contact.

De préférence, l'invention se rapporte à un pneu dont la bande de roulement est en caoutchouc.

L'invention s'étend aussi à une méthode de détection d'une caractéristique d'adhérence entre une roue possédant une bande de roulement déformable et un sol de roulement selon les revendications 11 et 14.

L'invention permet bien entendu d'estimer la "marge d'adhérence disponible" par la différence entre le potentiel d'adhérence du pneu et le rapport entre l'effort tangentiel et l'effort vertical effectivement appliqués au pneu. A titre d'illustration non limitative, on peut estimer l'effort tangentiel, par exemple dans le sens longitudinal, ainsi que l'effort vertical au moyen de ce qui est décrit dans le brevet US 5,913,240. Mais on peut aussi estimer l'effort tangentiel et l'effort vertical à partir de mesures toutes faites dans la bande de roulement. D'autres détails seront donnés à ce sujet dans la suite.

L'invention est illustrée par les figures suivantes :
- la figure 1 est une vue partielle d'ensemble d'une bande de roulement d'un pneu montrant un premier mode de réalisation d'un élément de celle-ci adapté à la mesure dans son environnement,
- la figure 2 est un agrandissement permettant de mieux voir le premier mode de réalisation de l'élément montré à la figure 1,
- la figure 3 est une coupe radiale selon III-III à la figure 2,
- la figure 4 illustre un deuxième mode de réalisation d'un élément,
- la figure 5 illustre un troisième mode de réalisation d'un élément,
- la figure 6 illustre une combinaison des premier et troisième modes de réalisation d'un élément,
- la figure 7 illustre une combinaison des premier et deuxième modes de réalisation d'un élément,
- la figure 8 illustre une première variante du premier mode de réalisation d'un élément,
- la figure 9 illustre une seconde variante du premier mode de réalisation d'un élément,
- la figure 10 illustre un autre aspect de l'invention,
- la figure 11 illustre un autre aspect encore,
- la figure 12 illustre une variante de réalisation applicable à tous les modes de réalisation présentés ci-dessus,
- la figure 13 illustre une autre variante de réalisation applicable à tous les modes de réalisation présentés ci-dessus,
- la figure 14 illustre une autre possibilité de variante de réalisation applicable à tous les modes de réalisation présentés ci-dessus,

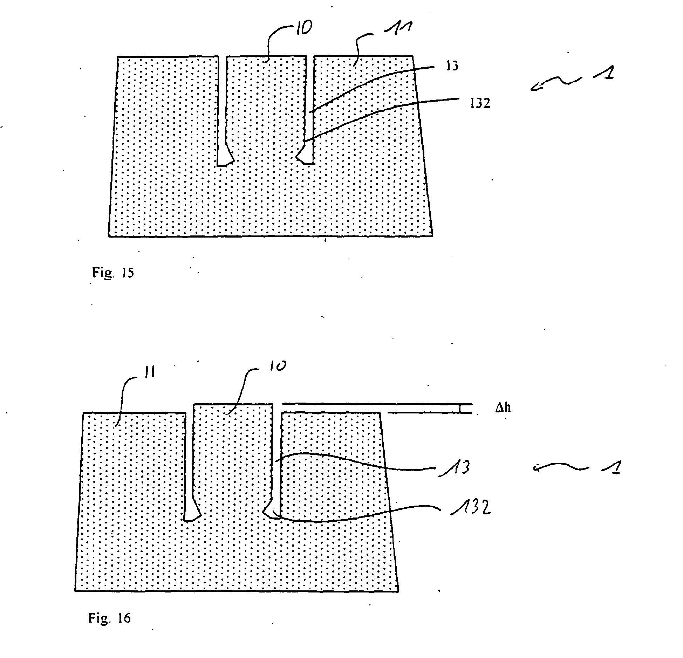

- la figure 15 illustre une variation possible, applicable aux réalisations incluant le premier mode de réalisation,
- la figure 16 illustre une autre variation encore, applicable aux réalisations incluant le premier mode de réalisation.

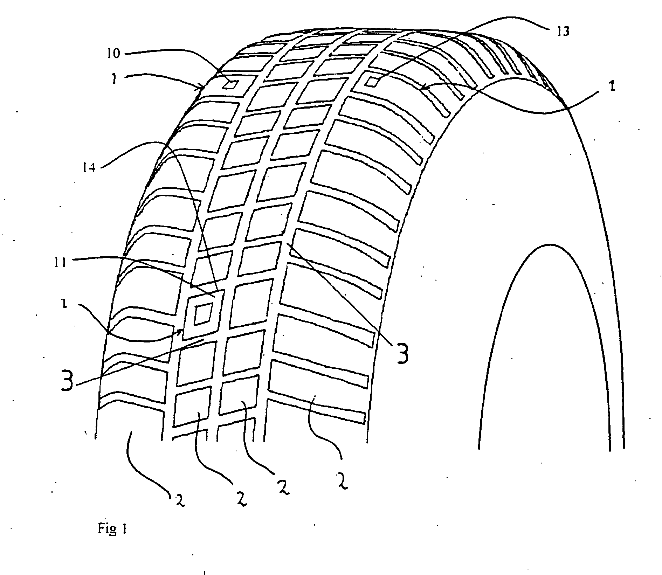

On voit à la figure 1 un pneu présentant une sculpture sur sa bande de roulement. La sculpture est choisie uniquement à titre exemplatif et non limitatif. Cette sculpture comporte un certain nombre de pains 2 de caoutchouc, de forme judicieuse et variable, selon les règles de l'art pour concevoir des bandes de roulement. On appelle ici « pain » de caoutchouc un bloc de caoutchouc limité sur tout son pourtour par une gorge assez profonde. Un certain nombre de ces pains sont ici adaptés pour en faire des éléments de mesure 1.

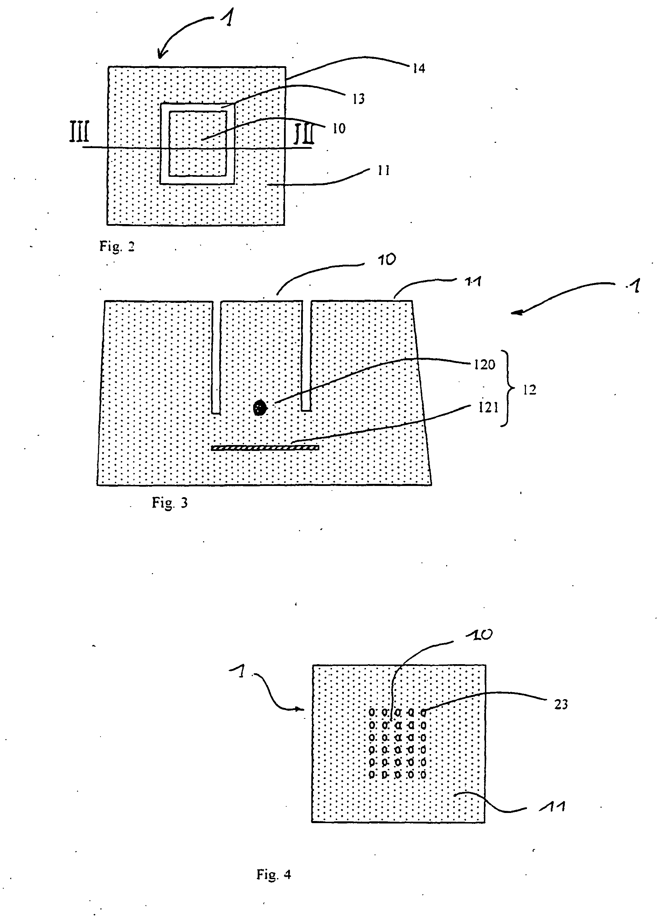

Sur chaque élément de mesure 1 (voir aussi figures 2 et 3), on voit une zone centrale 10 entourée d'une zone d'encerclement 11. A la figure 3, on voit un capteur 12, disposé à l'intérieur de ladite zone centrale. Un tel capteur est disposé de préférence radialement à l'intérieur de la partie de l'épaisseur de la bande de roulement destinée à être usée (« radialement » est utilisé selon le sens usuel dans le domaine des pneus). Ces capteurs peuvent mesurer des contraintes ou des déplacements. Il s'agit de mesurer un ou des états corrélés aux déformations ou aux contraintes que subit le pneu au cours du roulage, à la surface de contact en regard de cet endroit, dans les directions longitudinale et transversale. On utilise par exemple un dispositif à effet Hall, comportant un élément magnétique 120 et au moins un dispositif à effet Hall 121.

Aux figures 1 à 3, on voit une lamelle 13, c'est à dire un évidemment de faible épaisseur par comparaison avec la taille des gorges 3 adjacentes aux pains. Dans une large plage de sollicitations développées au contact du pneu sur le sol au cours d'un fonctionnement normal, une grande partie, voire la totalité de la zone centrale 10 de l'élément de mesure 1 glisse sur le sol. On a constaté que ceci se produit même en roulage libre (pas de couple) à basse vitesse, y compris sur des sols de forte adhérence. Ce phénomène de glissement de la zone centrale se produit au moins pendant une partie de chaque passage de l'élément de mesure dans l'aire de contact sur le sol. La garantie que l'on ait ce phénomène de glissement dans l'élément de mesure 1 permet de mesurer le potentiel de frottement sur le sol. Dans le reste de la bande de roulement au contraire, seules des petites parties glissent sur le sol et ces parties éventuellement en glissement sont bien trop petites pour permettre une mesure exploitable pour accéder au potentiel de frottement.

On a remarqué qu'il existe au centre d'un pain, c'est à dire à une certaine distance des bords 14, une excellente corrélation entre les efforts orientés tangentiellement, c'est à dire ceux assurant toutes les accélérations du véhicule, y compris pour le guider, apparaissant à la surface de contact et les efforts parallèles que l'on peut mesurer plus à l'intérieur, au delà de la limite de la partie d'usure de la bande de roulement.

Suivant un premier mode de réalisation, une lamelle découple le matériau situé radialement sous la surface de la zone centrale par rapport au matériau adjacent situé sous la zone d'encerclement. De préférence, l'épaisseur de ladite lamelle vaut approximativement de 0,3 mm à 2 mm. Eventuellement, ladite lamelle est au moins partiellement inclinée.

Cependant, l'invention concerne en soi un pneu dont la bande de roulement comporte au moins un élément de mesure 1 dont la surface est destinée à entrer en contact avec le sol à chaque tour du pneu, ledit élément de mesure, vu à la surface de la bande de roulement, ayant une zone centrale 10 entourée d'une zone d'encerclement 11, une lamelle découplant le matériau situé radialement sous la surface de la zone centrale par rapport au matériau adjacent situé sous la zone d'encerclement, un capteur 12 étant disposé en regard de ladite zone centrale, ledit capteur étant sensible au moins à un effort tangentiel exercé à la surface de ladite zone centrale.

Le découplage assuré par la lamelle 13 permet d'effectuer la mesure envisagée, de façon très acceptable, et l'on pense que c'est parce que ladite zone centrale offre une moindre résistance à un effort orienté perpendiculairement à la surface de la bande de roulement que la résistance à un effort orienté perpendiculairement à la surface de la bande de roulement offerte par la zone d'encerclement. Cela permet d'éviter qu'apparaissent des pressions de contact au sol trop élevées pour permettre le glissement de la zone centrale. D'où la présentation générale de l'invention faite dans le préambule ci-dessus.

Un avantage de l'invention est de pouvoir ainsi appréhender la marge d'adhérence disponible jusqu'à usure totale du pneu, grâce à une mesure du potentiel de frottement faite comme indiqué.

Ce qui est exposé ici est a fortiori utilisable pour une bande de roulement dépourvue de sculpture.

Le pneu ainsi adapté va permettre d'estimer le "potentiel d'adhérence", notion définie ci-dessus et utilisée essentiellement en liaison avec l'ensemble de la bande de roulement. Le pneu ainsi adapté peut aussi permettre d'estimer le "potentiel de frottement", notion également définie ci-dessus.

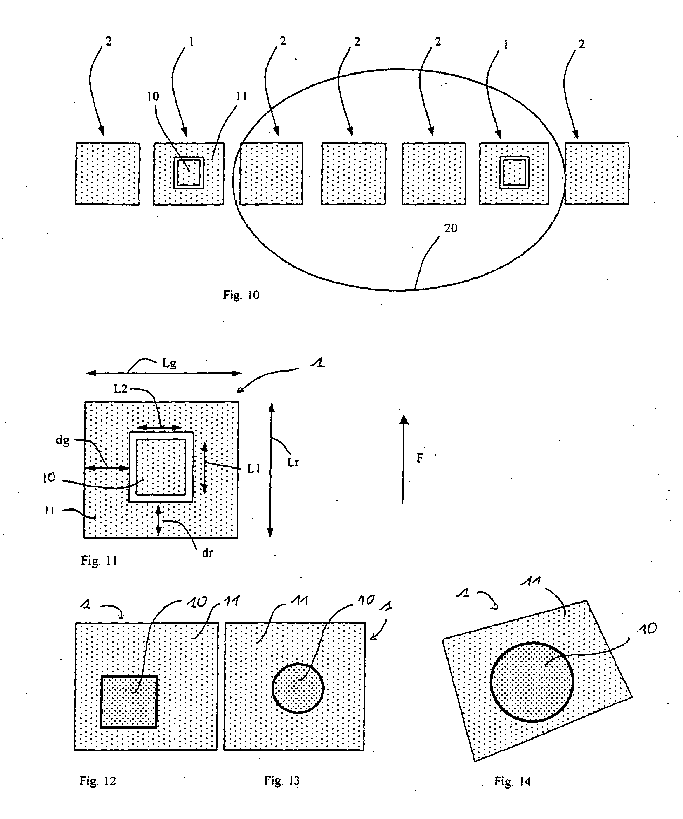

Avec un ou des capteurs 12 appropriés, judicieusement disposés, on peut obtenir ces mesures pendant toute la durée de vie du pneu. Il est bien entendu souhaitable que la partie de la bande de roulement du pneu spécifique pour la mesure soit aussi peu importante que possible, ou plus fondamentalement que cette partie ne dégrade pas les performances du pneu. C'est pourquoi il peut être intéressant de la limiter à un ou un petit nombre de pains de caoutchouc. On peut obtenir l'information souhaitée en faisant une seule mesure par tour du pneu. De façon avantageuse, comme montré à la figure 10, le pneu comporte suffisamment d'éléments de mesure de façon à ce qu'il y en ait toujours au moins un dans l'aire de contact 20 avec le sol. Quant au véhicule, on pense qu'il est superflu que tous ses pneus soient concernés par de telles mesures, un pneu par côté pouvant être suffisant.

On peut mouler dans la zone centrale une pluralité d'évidements en forme de puits. Eventuellement, lesdits évidements en forme de puits sont au moins partiellement inclinés.

Cela est illustré à la figure 4. La présence desdits évidements 23 permet d'effectuer la mesure envisagée, de façon très acceptable, et l'on pense que c'est parce que ladite zone centrale offre une moindre résistance à un effort orienté perpendiculairement à la surface de la bande de roulement que la résistance à un effort orienté perpendiculairement à la surface de la bande de roulement offerte par la zone d'encerclement.

Dans un troisième mode de réalisation, le module de Young du matériau situé sous la zone centrale est plus petit que le module de Young du matériau adjacent situé sous la zone d'encerclement.

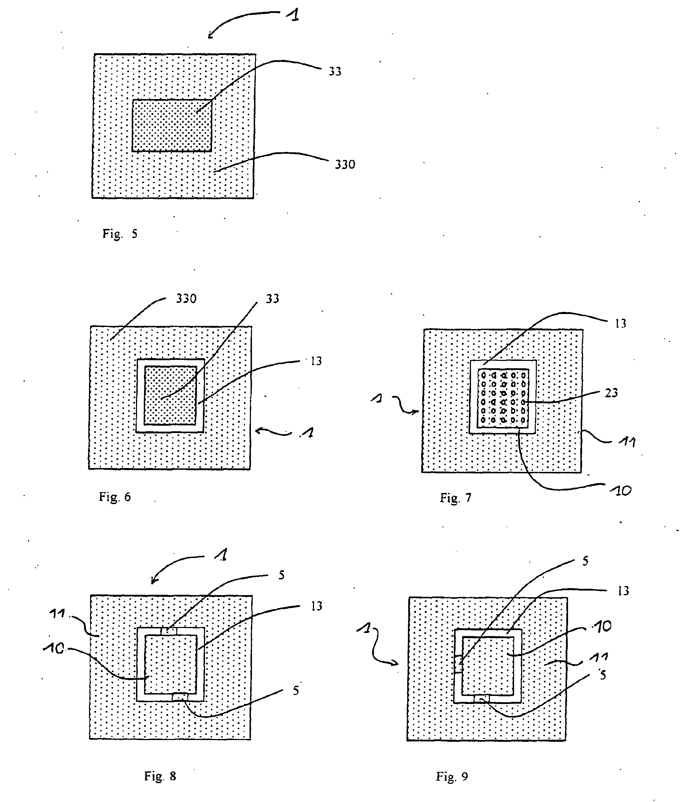

Cela est illustré à la figure 5. L'utilisation de matériaux différents permet d'effectuer la mesure envisagée, de façon très acceptable, et l'on pense que c'est parce que ladite zone centrale offre une moindre résistance à un effort orienté perpendiculairement à la surface de la bande de roulement que la résistance à un effort orienté perpendiculairement à la surface de la bande de roulement offerte par la zone d'encerclement.

Les variantes exposées ci-dessus peuvent être avantageusement combinées. Il est ainsi possible de maintenir, pendant toute la durée de vie du pneu, une pression de contact verticale suffisante, entre la zone centrale d'un élément de mesure et le sol, pour garantir une bonne précision de la mesure des potentiels d'adhérence.

On peut donc cumuler deux ou plus de deux des concepts exposés ci-dessus, le découplage par une lamelle fermée sur elle-même étant un premier concept, le moulage d'une pluralité d'évidements étant un deuxième concept, et l'utilisation de matériaux ayant un module de Young différents étant un troisième concept. La figure 6 illustre une combinaison des premier et troisième modes de réalisation d'un élément de mesure. Remarquons que l'on peut envisager que la zone centrale de l'élément de mesure soit dans ce cas réalisée dans un matériau de module de Young plus grand que le module de Young du matériau dans lequel est réalisé l'élément d'encerclement. On peut en fait ajuster, dans un sens ou dans un autre, les matériaux pour privilégier plus ou moins la résistance à l'usure et la tendance à glisser.

La figure 7 illustre une combinaison des premier et deuxième modes mode de réalisation d'un élément de mesure. On pourrait bien entendu cumuler les caractéristiques des trois modes de réalisation présentés.

Les figures 8 et 9 illustrent deux variantes du premier mode de réalisation d'un élément, dans lesquelles des ponts de caoutchouc 5 relient localement le caoutchouc sous la zone centrale au caoutchouc sous la zone d'encerclement.

En remarque de portée générale, précisons qu' il est avantageux que la surface de la zone centrale soit au moins sensiblement équivalente à la surface de la zone d'encerclement.

Selon un autre aspect de l'invention, illustré à la figure 11, le pneu peut présenter les caractéristiques suivantes. Lᵣ étant la longueur de l'élément de mesure 1 dans le sens préférentiel de roulage illustré par la flèche F, L_{g} étant la longueur de l'élément de mesure dans le sens perpendiculaire au sens préférentiel de roulage, L₁ étant la longueur de la zone centrale 10 dans le sens préférentiel de roulage, L₂ étant la longueur de la zone centrale 10 dans le sens perpendiculaire au sens préférentiel de roulage, dᵣ étant la longueur minimale mesurable sur la zone d'encerclement 11 dans le sens préférentiel de roulage, d_{g} étant la longueur minimale mesurable sur la zone d'encerclement 11 dans le sens perpendiculaire au sens préférentiel de roulage, on respecte les relations suivantes : dr > Lr/10, dg > Lg/10, Lr/5<L1<4Lr/5, et Lg/5<L2<4Lg/5.

Enfin, les figures 12 à 14 évoquent les nombreuses variantes de forme (qui sont en fait infinies) que l'on peut apporter à la zone centrale et à la zone d'encerclement. De préférence, en respectera cependant la règle suivante : le barycentre de l'élément de mesure 1 est dans la zone centrale 10.

On a vu en préambule que l'invention propose une méthode de détection d'une caractéristique d'adhérence de la bande de roulement sur le sol.

A partir d'une relation préétablie pour relier le potentiel de frottement et le potentiel d'adhérence du pneu, d'une part, et d'une procédure de réétalonnage régulier utilisant par exemple la propriété selon laquelle le potentiel d'adhérence maximum du pneu sur toutes les conditions de chaussée confondues évolue peu, il est possible de déduire la valeur du potentiel d'adhérence du pneu de la valeur de la contrainte de cisaillement exercée sur la zone centrale d'un élément de mesure ou de tout signal représentatif de cette contrainte de cisaillement. Cette procédure de réétalonnage est utile car la pression sous la zone centrale d'un élément de mesure peut évoluer au cours de l'usage du pneu, par exemple en fonction de l'usure du pneu, pour des conditions identiques de charge du pneu et de pression de gonflage et cette évolution de la pression introduit une variable qui modifie la relation entre la contrainte de cisaillement exercée sur la zone centrale d'un élément de mesure et le potentiel d'adhérence du pneu.

Si la zone centrale d'un élément de mesure est de surcroît équipée d'une mesure de la contrainte verticale au même point, il est possible de calculer le coefficient de frottement entre la zone centrale d'un élément de mesure et le sol en effectuant le rapport entre la contrainte de cisaillement et la contrainte verticale. Dans ce cas, il n'est peut être pas utile de procéder à un réétalonnage régulier pour évaluer le potentiel d'adhérence du pneu.

On peut envisager d'effectuer des mesures dans la partie de la bande de roulement extérieure à ce qui est appelé ici « élément de mesure », c'est à dire dans la partie de la bande de roulement dont les propriétés de doivent rien au souci d'effectuer des mesures.

Selon l'invention, on propose d'estimer la "marge d'adhérence disponible" sans passer par une mesure ou une estimation de l'effort vertical effectivement appliqué au pneu. Pour cela, l'invention propose une méthode de détection d'une caractéristique d'adhérence entre une roue possédant une bande de roulement déformable et un sol de roulement, comprenant les étapes suivantes :
a) prévoir dans la bande de roulement au moins un élément de mesure dont la surface est destinée à entrer en contact avec le sol à chaque tour du pneu, ledit élément de mesure, vu à la surface de la bande de roulement, ayant une zone centrale entourée d'une zone d'encerclement, ladite zone centrale étant agencée pour glisser sur le sol à un niveau de sollicitations parallèles à la surface du sol substantiellement plus faible que le niveau de sollicitations parallèles à la surface du sol au delà duquel la zone d'encerclement glisse sur le sol,
b) disposer un capteur de façon à effectuer une mesure dans ladite zone centrale, ledit capteur étant sensible au moins à un paramètre reflétant un effort tangentiel exercé à la surface de ladite zone centrale ;
c) produire un premier signal représentatif d'un effort tangentiel dans ladite zone centrale ;
d) détecter sur ledit premier signal l'instant d'entrée dans l'aire de contact de ladite zone centrale ;
e) détecter sur ledit premier signal l'instant où le premier signal subit une variation caractéristique d'une perte d'adhérence ; et
f) produire une indication caractéristique d'une marge d'adhérence disponible à partir d'une fonction du premier signal entre l'instant de détection de l'entrée dans l'aire de contact et l'instant de détection de ladite variation caractéristique.

Avantageusement, ladite fonction du premier signal est le rapport entre la valeur moyenne de la dérivée première dudit signal par rapport au temps et la valeur du signal au point caractéristique d'une perte d'adhérence. En variante, ladite fonction du premier signal est l'intervalle de temps séparant lesdites détections.

Enfin, en variante, l'invention propose une méthode de détection d'une caractéristique d'adhérence entre une roue possédant une bande de roulement déformable et un sol de roulement, comprenant les étapes suivantes :
a) prévoir dans la bande de roulement au moins un élément de mesure dont la surface est destinée à entrer en contact avec le sol à chaque tour du pneu, ledit élément de mesure, vu à la surface de la bande de roulement, ayant une zone centrale entourée d'une zone d'encerclement, ladite zone centrale étant agencée pour glisser sur le sol à un niveau de sollicitations parallèles à la surface du sol substantiellement plus faible que le niveau de sollicitations parallèles à la surface du sol au delà duquel la zone d'encerclement glisse sur le sol,
b) disposer un capteur de façon à effectuer une mesure dans ladite zone centrale, ledit capteur étant sensible au moins à un paramètre reflétant un effort tangentiel exercé à la surface de ladite zone centrale ;
c) disposer un capteur en regard d'une zone de la surface de contact de la bande de roulement extérieure à ou aux éléments de mesure, ledit capteur étant sensible au moins à un paramètre reflétant un effort tangentiel exercé à la surface de ladite zone extérieure ;
d) produire un premier signal, représentatif d'un effort tangentiel dans ladite zone centrale ;
e) produire un deuxième signal, représentatif d'un effort tangentiel dans ladite zone extérieure ;
f) produire une indication caractéristique d'une marge d'adhérence disponible à partir d'une comparaison desdits premier et deuxième signaux.

Le potentiel d'adhérence du pneu sur la chaussée conditionne directement le niveau maximal des efforts de guidage, de freinage et de motricité qui peuvent être transmis au véhicule. Il est un élément déterminant de la mobilité et de la tenue de route des véhicules.

Des études statistiques menées dans plusieurs pays montrent qu'il existe une relation indéniable entre ce potentiel d'adhérence et le risque d'accidents sur chaussée mouillée : plus le niveau du potentiel d'adhérence sur chaussée mouillée est faible et plus le risque d'accident est élevé. La sécurité des usagers dépend donc étroitement du potentiel d'adhérence.

Un enjeu important pour la sécurité est de pouvoir évaluer le niveau du potentiel d'adhérence du pneu le plus tôt possible avant d'atteindre la limite d'adhérence, car la possibilité d'éviter un accident en cas d'une adhérence insuffisante sera d'autant plus grande que les actions pour adapter les conditions de roulage du véhicule seront réalisées tôt.

Le principe de conception du pneu présenté ici représente un intérêt important de ce point de vue. En effet, il permet d'évaluer le niveau du potentiel d'adhérence même lorsque le pneu est en roulage libre, ce qui revient à dire qu'il est possible de déterminer ce potentiel dans toutes les conditions de roulage du véhicule, depuis la situation de roulage en ligne droite à vitesse constante jusqu'aux situations de freinage et d'accélération maximaux, ou de virages pris à la limite d'adhérence. Le potentiel d'adhérence disponible peut ainsi être évalué en permanence.

A partir des mesures exposées, il est également possible de connaître la part du potentiel d'adhérence effectivement utilisée.

Le tableau suivant illustre des applications permises par la connaissance de ces informations.

| | | DESTINATAIRE DE L'INFORMATION | | | | |
|---|---|---|---|---|---|---|
| INFORMATIONS SAISIES | CONDUCTEUR | | VEHICULE | | AUTRES USAGERS & GESTIONNAIRES ROUTES | |
| POTENTIEL ADHERENCE | • | Informer des variations de niveau de potentiel adhérence | • | Adapter la stratégie de pilotage de systèmes actifs (antiblocage, antipatinage, contrôle de trajectoire) | • | Informer les autres usagers du niveau d'adhérence disponible en tout point du réseau (en association avec un système de repérage de position) |
| | • | Comparer le potentiel instantané a une population statistique des niveaux d'adhérence et informer de la position de ce potentiel instantané par rapport à cette population (niveau fort, moyen, faible, très faible) | | | | |
| | | | • | Assister le conducteur, corriger des commandes, lorsque ces commandes apparaissent inadaptées ou lorsqu'une action correctrice apparaît nécessaire compte tenu de la réponse prévue du véhicule | | |
| | | | | | • | Fournir aux organismes chargés de l'entretien du réseau des données temps réel permettant une gestion optimale de l'entretien |
| MARGE D'ADHERENCE DISPONIBLE | Informer le conducteur du taux d'utilisation du potentiel et l'alerter à l'approche de la limite d'adhérence | | Réguler des systèmes actifs (antiblocage, antipatinage, contrôle de trajectoire) | | Alerter les gestionnaires des réseaux routiers des points où la limite d'adhérence est le plus souvent approché | |

A partir de la seule connaissance du potentiel d'adhérence disponible, ou d'une information directement corrélée au potentiel d'adhérence, il est possible :
- d'informer le conducteur du véhicule :
   ⇒ lorsque des variations du niveau d'adhérence surviennent : par exemple, si le potentiel diminue, au delà d'un certain niveau de variation, une alerte peut être délivrée au conducteur sous une forme sonore ou visuelle pour l'inciter à adapter sa conduite et à accroître sa vigilance ;
   ⇒ sur le niveau relatif d'adhérence dont il dispose à un instant donné en comparaison à une base statistique des niveaux d'adhérence rencontrés : l'information prélevée en continu, lorsque le véhicule roule, peut alimenter une base de données implantée dans un système informatique lié au véhicule ou extérieur au véhicule (base de données centralisée avec laquelle le véhicule communiquerait) ; de plus, cette information peut être comparée à la population statistique déjà stockée dans la base de données pour déterminer à quel percentile de la population elle correspond ; ce résultat peut être converti en une information simple délivrée au conducteur (par exemple par l'indication d'un niveau conventionnel qualifiant l'adhérence disponible : fort, moyen, faible, très faible) ;
- d'agir sur le véhicule :
   ⇒ en adaptant la stratégie de pilotage de systèmes du véhicule tels que les systèmes d'antiblocage de roues, d'antipatinage et de contrôle actif de trajectoire : ces systèmes pourraient disposer de stratégies différentes selon le niveau d'adhérence et prédéfinies par construction; en fonction du niveau instantané d'adhérence, la stratégie de pilotage la plus adaptée pourrait être mise en oeuvre ;
   ⇒ en permettant la détermination des commandes optimales à appliquer à un organe du véhicule : des simulations numériques en temps réel peuvent maintenant être réalisées dans les véhicules ; connaissant le niveau d'adhérence, il est possible de rechercher la commande à appliquer à un organe (frein par exemple) pour que la réponse soit optimale ; il est aussi possible de prédire par simulation quelle sera la réponse du véhicule aux commandes exercées par le conducteur et de corriger en conséquence ses commandes ou de l'assister dans le cas où les commandes apparaîtraient inadaptées ;
- d'informer les autres usagers de la route et les organismes chargés de la gestion du réseau routier, en communiquant ces informations à des bases centrales de données ; les moyens actuels de communication et de localisation des mobiles (système GPS par exemple) permettent d'associer à chaque information sur le potentiel d'adhérence fournie par un véhicule la localisation précise de la portion routière correspondante et de transmettre ces informations à un système centralisé ; partant de ces informations, il est possible :
   ⇒ d'informer les autres usagers de la route, et leurs véhicules, du niveau disponible en un point donné avant même qu'ils n'aient atteint ce point, ce qui permet d'anticiper encore plus les actions correctives éventuellement nécessaires au niveau des commandes des véhicules ;
   ⇒ de fournir aux gestionnaires du réseau routier des informations statistiques précises et en temps réel sur le niveau d'adhérence, rendant ainsi inutiles les opérations régulières de mesure de l'adhérence réalisées dans certains pays pour surveiller leur réseau routier.

Si cette information sur le potentiel d'adhérence disponible est complétée de l'information sur le niveau d'adhérence effectivement utilisé, il est possible en plus :
- d'informer le conducteur sur le taux d'utilisation de ce potentiel disponible et de l'alerter à l'approche de la limite d'adhérence ;
- de réguler des systèmes du véhicule (systèmes antiblocage de roues ou antipatinage, par exemple) directement à partir de la différence entre le potentiel disponible et le potentiel utilisé ;
- de fournir aux personnes en charge de la gestion du réseau routier des informations statistiques permettant de détecter les points du réseau où la limite d'adhérence est le plus souvent approchée et où le risque d'accident peut être important de ce fait, avant même que ce risque ne se soit exprimé au travers des statistiques d'accidents.

On peut par exemple procéder à une mesure comme expliqué par le brevet DE 3937966 A1. On a vu qu'un élément magnétique peut être incorporé dans la zone centrale d'un élément de mesure, à un endroit tel que cet élément subisse un déplacement relatif par rapport à des capteurs à effet Hall placés dans la bande de roulement lorsque ledit élément de mesure est soumis à un effort tangentiel ou à un effort normal. Les capteurs à effet Hall sont disposés de façon à mesurer le déplacement de l'élément magnétique au minimum sous l'effet d'un effort tangentiel appliqué à la surface d'un élément de mesure, voire à mesurer en plus son déplacement, de façon distincte.

En variante, on pourrait aussi effectuer une mesure comme enseigné par le brevet US 5 864 056 ou US 5 502433.

Les signaux ainsi mesurés sont envoyés à une unité de calcul qui détermine le potentiel d'adhérence et la marge d'adhérence disponible selon l'une des méthodes proposées. Notons que la technologie actuelle permet la transmission, de préférence la télétransmission de signaux depuis une ou plusieurs unités de mesure implantées dans la bande de roulement et le véhicule proprement dit, que ce n'est pas l'objet de cette invention que de traiter de cet aspect, qui est relativement indépendant des aspects de mesures qui sont traités ici.

Ces informations calculées sont adressées elles-mêmes, par exemple à un dispositif permettant d'informer le conducteur, ou bien sont envoyées, par exemple par voie hertzienne, à un système extérieur au véhicule, permettant de centraliser les informations relatives au potentiel d'adhérence du sol et destiné à informer tous les usagers de la route, ou bien encore sont utilisées pour réguler des systèmes ou des organes du véhicule sur lequel le pneu est monté.

## Revendications

1. Pneu dont la bande de roulement comporte au moins un élément de mesure (1) dont la surface est destinée à entrer en contact avec le sol à chaque tour du pneu, ledit élément de mesure, vu à la surface de la bande de roulement, ayant une zone centrale (10) et une zone (11)entourant la zone centrale (10), une lamelle découplant le matériau situé radialement sous la surface de la zone centrale par rapport au matériau adjacent situé sous la zone (11) entourant la zone centrale (10), un capteur (12) étant disposé de façon à effectuer une mesure dans de ladite zone centrale, ledit capteur étant sensible au moins à un effort tangentiel exercé à la surface de ladite zone centrale.

2. Pneu selon la revendication 1, dans lequel l'épaisseur de ladite lamelle vaut approximativement de 0,3 mm à 2 mm.

3. Pneu selon l'une des revendications 1 ou 2, dans lequel ladite lamelle est au moins partiellement inclinée.

4. Pneu selon l'une des revendications 1 à 3, dans lequel la surface de la zone centrale est au moins sensiblement équivalente à la surface de la zone (11) entourant la zone centrale .

5. Pneu selon l'une des revendications 1 à 3 dans lequel, Lr étant la longueur de l'élément de mesure (1)dans le sens préférentiel de roulage, Lg étant la longueur de l'élément de mesure dans le sens perpendiculaire au sens préférentiel de roulage, L1 étant la longueur de la zone centrale (10) dans le sens préférentiel de roulage, L2 étant la longueur de la zone centrale (10) dans le sens perpendiculaire au sens préférentiel de roulage, dr étant la longueur minimale mesurable sur la zone (11) entourant la zone centrale (10) dans le sens préférentiel de roulage, dg étant la longueur minimale mesurable sur la zone (11) entourant la zone centrale (10) dans le sens perpendiculaire au sens préférentiel de roulage, on respecte les relations suivantes : dr > Lr/10, dg > Lg/10, Lr/5<L1<4Lr/5, et Lg/5<L2<4Lg/5.

6. Pneu selon l'une des revendications 1 à 4, dans lequel le barycentre de l'élément de mesure (1) est dans la zone centrale (10).

7. Pneu selon l'une des revendications 1 à 5, comportant suffisamment d'éléments de mesure de façon à ce qu'il y en ait toujours au moins un dans la zone en contact avec le sol.

8. Pneu selon l'une des revendications 1 à 6, dans lequel le capteur (12) est noyé dans la paroi dudit pneu.

9. Pneu selon la revendication 7, dans lequel le capteur (12) est disposé en dehors de la partie de la bande de roulement destinée à être usée au cours de l'utilisation dudit pneu.

10. Pneu selon l'une des revendications 1 à 8, dans lequel le capteur (12) comporte un ou des dispositifs à effet Hall.

11. Méthode de détection d'une caractéristique d'adhérence entre une roue possédant une bande de roulement déformable et un sol de roulement, comprenant les étapes suivantes :
a) prévoir dans la bande de roulement au moins un élément de mesure dont la surface est destinée à entrer en contact avec le sol à chaque tour du pneu, ledit élément de mesure, vu à la surface de la bande de roulement, ayant une zone centrale et une zone entourant la zone centrale , ladite zone centrale étant agencée pour glisser sur le sol à un niveau de sollicitations parallèles à la surface du sol substantiellement plus faible que le niveau de sollicitations parallèles à la surface du sol au delà duquel la zone entourant la zone centrale glisse sur le sol,
b) disposer un capteur de façon à effectuer une mesure dans ladite zone centrale, ledit capteur étant sensible au moins à un paramètre reflétant un effort tangentiel exercé à la surface de ladite zone centrale;
c) produire un premier signal représentatif d'un effort tangentiel dans ladite zone centrale ;
d) détecter sur ledit premier signal l'instant d'entrée dans l'aire de contact de ladite zone centrale ;
e) détecter sur ledit premier signal l'instant où le premier signal subit une variation caractéristique d'une perte d'adhérence ; et
f) produire une indication caractéristique d'une marge d'adhérence disponible à partir d'une fonction du premier signal entre l'instant de détection de l'entrée dans l'aire de contact et l'instant de détection de ladite variation caractéristique.

12. Méthode de détection selon la revendication 11 dans laquelle ladite fonction du premier signal est le rapport entre la valeur moyenne de la dérivée première dudit signal par rapport au temps et la valeur du signal au point caractéristique d'une perte d'adhérence.

13. Méthode de détection selon la revendication 11 dans laquelle ladite fonction du premier signal est l'intervalle de temps séparant lesdites détections.

14. Méthode de détection d'une caractéristique d'adhérence entre une roue possédant une bande de roulement déformable et un sol de roulement, comprenant les étapes suivantes :
a) prévoir dans la bande de roulement au moins un élément de mesure dont la surface est destinée à. entrer en contact avec le sol à chaque tour du pneu, ledit élément de mesure, vu à la surface de la bande de roulement, ayant une zone centrale et une zone entourant la zone centrale , ladite zone centrale étant agencée pour glisser sur le sol à un niveau de sollicitations parallèles à la surface du sol substantiellement plus faible que le niveau de sollicitations parallèles à la surface du sol au delà duquel la zone entourant la zone centrale glisse sur le sol,
b) disposer un capteur de façon à effectuer une mesure dans ladite zone centrale, ledit capteur étant sensible au moins à un paramètre reflétant un effort tangentiel exercé à la surface de ladite zone centrale ;
c) disposer un capteur en regard d'une zone de la surface de contact de la bande de roulement extérieure à ou aux éléments de mesure, ledit capteur étant sensible au moins à un paramètre reflétant un effort tangentiel exercé à la surface de ladite zone extérieure ;
d) produire un premier signal, représentatif d'un effort tangentiel dans ladite zone centrale ;
e) produire un deuxième signal, représentatif d'un effort tangentiel dans ladite zone extérieure ;
f) produire une indication caractéristique d'une marge d'adhérence disponible à partir d'une comparaison desdits premier et deuxième signaux.

## Claims

1. Tyre whose tread comprises at least one measuring element (1) whose surface is intended to come into contact with the ground at each revolution of the tyre, said measuring element, viewed at the surface of the tread, having a central zone (10) surrounded by a zone (11) surrounding the central zone, a sipe relieving of stress the material situated radially beneath the surface of the central zone compared with the adjacent material situated beneath the zone (11) surrounding the central zone, a sensor (12) being arranged opposite said central zone, said sensor being sensitive to at least one tangential force exerted at the surface of said central zone.

2. Tyre according to claim 1, in which the thickness of said sipe comes to approximately 0.3 mm to 2 mm.

3. Tyre according to one of claims 1 or 2, in which said sipe is at least partially inclined.

4. Tyre according to one of claims 1 to 3, in which the surface area of the central zone is at least substantially equivalent to the surface area of the encircling zone (11).

5. Tyre according to one of claims 1 to 3 in which, Lᵣ being the length of the measuring element (1) in the preferred rolling direction, Lg being the length of the measuring element in the direction perpendicular to the preferred rolling direction, L₁ being the length of the central zone (10) in the preferred rolling direction, L₂ being the length of the central zone (10) in the direction perpendicular to the preferred rolling direction, dᵣ being the minimum length measurable on the zone (11) surrounding the central zone in the preferred rolling direction, dg being the minimum length measurable on the zone (11) surrounding the central zone (10) in the direction perpendicular to the preferred rolling direction, the following relations are obeyed: dr > Lr/10, dg > Lg/10, Lr/5 < L1 < 4Lr/5 and Lg/5 < L2 < 4Lg/5.

6. Tyre according to one of claims 1 to 4, in which the centre of mass of the measuring element (1) is in the central zone (10).

7. Tyre according to one of claims 1 to 5, comprising sufficient measuring elements to ensure that there is always at least one of them in the contact zone with the ground.

8. Tyre according to one of claims 1 to 6, in which the sensor (12) is embedded in the wall of said tyre.

9. Tyre according to claim 7, in which the sensor (12) is arranged outside the part of the tread intended to become worn during the use of said tyre.

10. Tyre according to one of claims 1 to 8, in which the sensor (12) comprises a device or devices with Hall effect.

11. Method of detecting a characteristic of adherence between a wheel possessing a deformable tread and a rolling ground, comprising the following stages:
a) providing in the tread at least one measuring element whose surface is intended to come into contact with the ground at each revolution of the tyre, said measuring element, viewed at the surface of the tread, having a central zone and a zone surrounding the central zone, said central zone being arranged to slide over the ground at a level of stresses parallel with the surface of the ground which is substantially weaker than the level of stresses parallel with the surface of the ground beyond which the zone surrounding the central zone slides over the ground,
b) disposing a sensor opposite said central zone, said sensor being sensitive to at least one parameter reflecting a tangential force exerted at the surface of said central zone,
c) producing a first signal representative of a tangential force in said central zone,
d) detecting on said first signal the moment of entry into the contact area of said central zone,
e) detecting on said first signal the moment at which the first signal undergoes a variation characteristic of a loss of adherence and
f) producing an indication characteristic of an available adherence margin based on a function of the first signal between the moment of detection of entry into the contact area and the moment of detection of said characteristic variation.

12. Method of detection according to claim 11 in which said function of the first signal is the ratio between the mean value of the first derivative of said signal plotted against time and the value of the signal at the point characteristic of a loss of adherence.

13. Method of detection according to claim 11 in which said function of the first signal is the time interval separating said detections.

14. Method of detecting a characteristic of adherence between a wheel possessing a deformable tread and a rolling ground, comprising the following stages:
a) providing in the tread at least one measuring element whose surface is intended to come into contact with the ground at each revolution of the tyre, said measuring element, viewed at the surface of the tread, having a central zone and a zone surrounding the central zone, said central zone being arranged to slide over the ground at a level of stresses parallel with the surface of the ground which is substantially weaker than the level of stresses parallel with the surface of the ground beyond which the zone surrounding the central zone slides over the ground,
b) disposing a sensor opposite said central zone, said sensor being sensitive to at least one parameter reflecting a tangential force exerted at the surface of said central zone,
c) disposing a sensor opposite a zone of the contact surface of the tread which is external to the measuring element or elements, said sensor being sensitive to at least one parameter reflecting a tangential force exerted at the surface of said external zone,
d) producing a first signal, representative of a tangential force in said central zone;
e) producing a second signal, representative of a tangential force in said external zone;
f) producing an indication characteristic of an available adherence margin based on a comparison of said first and second signals.

## Patentansprüche

1. Reifen, dessen Laufstreifen mindestens ein Messelement (1) aufweist, dessen Fläche dazu bestimmt ist, bei jeder Umdrehung des Reifens mit dem Boden in Kontakt zu kommen, wobei das Messelement, an der Fläche des Laufstreifens gesehen, eine zentrale Zone (10) und eine die zentrale Zone (10) umgebende Zone (11) hat, wobei eine Lamelle das sich radial unter der Fläche der zentralen Zone befindliche Material bezüglich des benachbarten, unter der die zentrale Zone (10) umgebenden Zone (11) befindlichen Materials abkoppelt, wobei ein Sensor (12) so angeordnet ist, dass er eine Messung in der zentralen Zone durchführt, wobei der Sensor auf mindestens eine Tangentialkraft anspricht, die an der Fläche der zentralen Zone ausgeübt wird.

2. Reifen nach Anspruch 1, bei dem die Dicke der Lamelle etwa 0,3 mm bis 2 mm beträgt.

3. Reifen nach einem der Ansprüche 1 oder 2, bei dem die Lamelle zumindest teilweise geneigt ist.

4. Reifen nach einem der Ansprüche 1 bis 3, bei dem die Fläche der zentralen Zone zumindest im Wesentlichen äquivalent zur Fläche der die zentrale Zone umgebenden Zone (11) ist.

5. Reifen nach einem der Ansprüche 1 bis 3, bei dem, wenn Lr die Länge des Messelements (1) in der bevorzugten Rollrichtung, Lg die Länge des Messelements in der Richtung lotrecht zur bevorzugten Rollrichtung, L1 die Länge der zentralen Zone (10) in der bevorzugten Rollrichtung, L2 die Länge der zentralen Zone (10) in der Richtung lotrecht zur bevorzugten Rollrichtung, dr die minimal messbare Länge in der die zentrale Zone (10) umgebenden Zone (11) in der bevorzugten Rollrichtung, dg die minimal messbare Länge in der die zentrale Zone (10) umgebenden Zone (11) in der Richtung lotrecht zur bevorzugten Rollrichtung ist, die folgenden Beziehungen eingehalten werden: dr > Lr/10, dg > Lg/10, Lr/5 < L1 < 4Lr/5, und Lg/5 < L2 < 4Lg/5.

6. Reifen nach einem der Ansprüche 1 bis 4, bei dem der Schwerpunkt des Messelements (1) sich in der zentralen Zone (10) befindet.

7. Reifen nach einem der Ansprüche 1 bis 5, der ausreichend Messelemente aufweist, damit es immer mindestens eins in der mit dem Boden in Kontakt stehenden Zone gibt.

8. Reifen nach einem der Ansprüche 1 bis 6, bei dem der Sensor (12) in die Wand des Reifens eingebettet ist.

9. Reifen nach Anspruch 7, bei dem der Sensor (12) außerhalb des Bereichs des Laufstreifens angeordnet ist, der dazu bestimmt ist, während der Nutzung des Reifens abgenutzt zu werden.

10. Reifen nach einem der Ansprüche 1 bis 8, bei dem der Sensor (12) eine oder mehrere Hall-Effekt-Vorrichtungen aufweist.

11. Verfahren zur Erfassung eines Merkmals des Haftens zwischen einem Rad, das einen verformbaren Laufstreifen besitzt, und einer Fahrbahn, das die folgenden Schritte enthält:
a) Vorsehen im Laufstreifen mindestens eines Messelements, dessen Fläche dazu bestimmt ist, bei jeder Umdrehung des Reifens mit dem Boden in Kontakt zu kommen, wobei das Messelement, gesehen an der Fläche des Laufstreifens, eine zentrale Zone und eine die zentrale Zone umgebende Zone hat, wobei die zentrale Zone so angeordnet ist, dass sie auf dem Boden auf einem Niveau von Beanspruchungen parallel zur Fläche des Bodens gleitet, das wesentlich geringer ist als das Niveau von Beanspruchungen parallel zur Fläche des Bodens, jenseits dessen die die zentrale Zone umgebende Zone auf dem Boden gleitet,
b) Anordnen eines Sensors, um eine Messung in der zentralen Zone durchzuführen, wobei der Sensor auf mindestens einen Parameter anspricht, der eine auf die Fläche der zentralen Zone ausgeübte Tangentialkraft reflektiert;
c) Erzeugen eines ersten Signals, das für eine Tangentialkraft in der zentralen Zone repräsentativ ist;
d) Erfassen, am ersten Signal, des Eintrittszeitpunkts in den Kontaktbereich der zentralen Zone;
e) Erfassen, am ersten Signal, des Zeitpunkts, in dem das erste Signal eine kennzeichnende Veränderung eines Haftverlusts erfährt; und
f) Erzeugen einer kennzeichnenden Anzeige eines verfügbaren Haftbereichs ausgehend von einer Funktion des ersten Signals zwischen dem Zeitpunkt der Erfassung des Eintritts in den Kontaktbereich und dem Zeitpunkt der Erfassung der kennzeichnenden Veränderung.

12. Erfassungsverfahren nach Anspruch 11, bei dem die Funktion des ersten Signals das Verhältnis zwischen dem Mittelwert der ersten Ableitung des Signals bezüglich der Zeit und dem Wert des Signals am kennzeichnenden Punkt eines Haftverlusts ist.

13. Erfassungsverfahren nach Anspruch 11, bei dem die Funktion des ersten Signals das die Erfassungen trennende Zeitintervall ist.

14. Verfahren zur Erfassung eines Merkmals der Haftung zwischen einem Rad, das einen verformbaren Laufstreifen besitzt, und einer Fahrbahn, das die folgenden Schritte enthält:
a) Vorsehen mindestens eines Messelements im Laufstreifen, dessen Fläche dazu bestimmt ist, bei jeder Umdrehung des Reifens mit dem Boden in Kontakt zu kommen, wobei das Messelement, gesehen an der Fläche des Laufstreifens, eine zentrale Zone und eine die zentrale Zone umgebende Zone hat, wobei die zentrale Zone angeordnet ist, um auf dem Boden auf einem Niveau von Beanspruchungen parallel zur Fläche des Bodens zu gleiten, das wesentlich geringer ist als das Niveau von Beanspruchungen parallel zur Fläche des Bodens, jenseits dessen die die zentrale Zone umgebende Zone auf dem Boden gleitet,
b) Anordnen eines Sensors, um eine Messung in der zentralen Zone durchzuführen, wobei der Sensor auf mindestens einen Parameter anspricht, der eine auf die Fläche der zentralen Zone ausgeübte Tangentialkraft reflektiert;
c) Anordnen eines Sensors gegenüber einer Zone der Kontaktfläche des Laufstreifens außerhalb des oder der Messelemente, wobei der Sensor auf mindestens einen Parameter anspricht, der eine an der Fläche der äußeren Zone ausgeübte Tangentialkraft reflektiert;
d) Erzeugen eines ersten Signals, das für eine Tangentialkraft in der zentralen Zone repräsentativ ist;
e) Erzeugen eines zweiten Signals, das für eine Tangentialkraft in der äußeren Zone repräsentativ ist;
f) Erzeugen einer kennzeichnenden Anzeige eines verfügbaren Haftbereichs ausgehend von einem Vergleich des ersten und des zweiten Signals.
